# EUROPÄISCHE PATENTSCHRIFT

(11) **EP 0 651 705 B1**
(45) Veröffentlichungstag und Bekanntmachung des Hinweises auf die Patenterteilung: **28.02.1996**
(21) Anmeldenummer: 93915974.5
(22) Anmeldetag: 22.07.1993
(51) Int. Cl.: B60T 8/26

(54) **VERFAHREN ZUR ERHÖHUNG DER FUNKTIONSSICHERHEIT EINER BREMSANLAGE MIT ELEKTRONISCHER REGELUNG DER BREMSKRAFTVERTEILUNG**
METHOD OF INCREASING THE RELIABILITY OF A BRAKING SYSTEM WITH ELECTRONIC CONTROL OF THE BRAKING-FORCE DISTRIBUTION
PROCEDE VISANT A AUGMENTER LA SECURITE DE FONCTIONNEMENT D'UN SYSTEME DE FREINAGE AVEC REGULATION ELECTRONIQUE DE LA REPARTITION DU FREINAGE

(30) Priorität: 29.07.1992 DE 4224971
(43) Veröffentlichungstag der Anmeldung: 10.05.1995
(73) Patentinhaber: ITT Automotive Europe GmbH, D-60488 Frankfurt am Main (DE)
(72) Erfinder: BUSCHMANN, Gunther, D-65510 Idstein (DE); WOYWOD, Jürgen, D-65795 Hatterscheim (DE)
(86) Internationale Anmeldenummer: EP9301942
(87) Internationale Veröffentlichungsnummer: WO9403351

(56) Entgegenhaltungen:
- DE-A- 3 323 402
- DE-A- 3 728 480
- DE-A- 4 141 653
- GB-A- 2 135 413

## Beschreibung

Die Erfindung bezieht sich auf ein Verfahren zur Erhöhung der Funktionssicherheit einer Bremsanlage mit elektronischer Bremskraftverteilung (EBKV), bei dem die Differenz zwischen dem Schlupf der Vorderräder und dem Schlupf der Hinterräder als Regelgröße dient und bei dem der Druckanstieg in den Hinterradbremsen begrenzt wird.

Bekanntlich ist es notwendig, die Aufteilung der Bremskraft auf die Vorderräder und Hinterräder zu variieren, um statische und dynamische Achslastverlagerungen auszugleichen. Hierzu werden mechanische, festeingestellte Druckminderer oder last- und/oder verzögerungsabhängige Bremskraftregler in zahlreichen Varianten verwendet. Mit diesen mechanischen Einrichtungen läßt sich nur eine relativ grobe Anpassung an die tatsächliche Achslastverteilung erzielen.

Es sind auch schon elektronische Bremskraftverteiler bekannt, die mit elektronisch betätigbaren Hydraulikventilen ausgerüstet sind, mit denen der Druckverlauf in den Radbremsen gesteuert werden kann (DE 33 23 402 C2). Im einfachsten Fall sind die Vorderradbremsen direkt an den Bremsdruckgeber der Bremanlage angeschlossen, während der Hydraulikweg zu den Hinterradbremsen über die Hydraulikventile führt. Das Drehverhalten der Räder wird mit Radsensoren gemessen, und es wird die Ansteuerung der Hydraulikventile derart ausgelegt, daß der Bremsschlupf an den Hinterrädern stets in einem bestimmten Verhältnis zu dem Bremsschlupf an den Vorderrädern steht; vorzugsweise wird nach der vorgenannten Patentschrift der Bremsschlupf an den Hinterrädern durch die EBKV-Regelung auf einen Wert von 85 bis 97% des Vorderrad-Bremsschlupfes begrenzt.

Eine elektronische Regelung dieser Art bietet sich insbesondere in Verbindung mit einem Antiblockiersystem an, weil die für die Blockierschutzregelung benötigten Hydraulikventile ohne jegliche Änderung auch für die elektronische Regelung der Bremskraftverteilung verwendet werden können. Entsprechendes gilt für die Radsensoren. Folglich ist nur ein minimaler Mehraufwand zur Erweiterung der Blockierschutzregelung zu einem System mit elektronischer Regelung der Bremskraftverteilung erforderlich.

Eine Regelung der Bremskraftverteilung in der geschilderten Weise, bei der die Differenz zwischen dem Bremsschlupf an der Vorderachse und den Bremsschlupf an der Hinterachse als Regelgröße dient, hat jedoch den Nachteil, daß bei einem Bremskreisausfall an der Vorderachse oder einer starken Verstimmung der Vorderradbremsen die Druckbegrenzung an den Hinterrädern zu früh einsetzt. Dieser Nachteil tritt insbesondere dann auf, wenn beide Vorderradbremsen an demselben Druckmittelkreis angeschlossen sind, also bei der sogen. Schwarz/Weiß-Bremskreisaufteilung.

Ferner ist aus der DE 34 18 044 C2 bereits eine hydraulische Mehrkreis-Bremsanlage mit Radsensoren, mit Hydraulikventilen in den Bremsleitungen und mit einer Überwachungsschaltung bekannt, die mit Hilfe dieser Sensoren die Reaktion des Rades auf die Bremsbetätigung feststellt und zur Fehlererkennung auswertet.

Der Erfindung liegt nun die Aufgabe zugrunde, diesen Nachteil der bekannten Bremsanlage mit elektronischer Regelung der Bremskraftverteilung zu überwinden, und zwar ohne Erhöhung der Herstellungskosten oder mit höchstens geringem Mehraufwand. Es hat sich gezeigt, daß diese Aufgabe mit dem im beigefügten Anspruch 1 oder im Anspruch 4 beschriebenen Verfahren gelöst werden kann.

Erfindungsgemäß wird also ständig die Reaktion der Vorderräder auf den Bremsdruck getestet und im Fehlerfall bzw. bei ungenügender Reaktion die elektronische Regelung der Bremskraftverteilung, d.h. die Begrenzung des Druckanstiegs an der Hinterachse als Folge einer über einem Grenzwert liegenden Bremsschlupfdifferenz, unterbunden. An den Hinterrädern steht der volle Bremsdruck an. Die Hinterräder können in diesem Fehlerfall ihren höchstmöglichen Beitrag zur Abbremsung des Fahrzeugs leisten.

Das Testen der Vorderradbremsen läßt sich nach einem vorteilhaften Ausführungsbeispiel des erfindungsgemäßen Verfahrens während eines Bremsvorganges durch einen kurzen Bremsdruck-Abbaupuls, der das Bremsgeschehen nur unmerklich beeinflußt, durchführen. Bei intaktem System führt selbst dieser kurze Bremsdruck-Abbaupuls zu einer auswertbaren Reaktion des Raddrehverhaltens.

Zweckmäßigerweise werden die beiden Vorderräder nacheinander mit den Testpulsen beaufschlagt. Dies ist insbesondere bei Bremsanlagen mit diagonaler Bremskreisaufteilung sinnvoll. Die Regelung kann dann je nach Art und Ort des Fehlers abgeschaltet oder geändert werden.

Nach einer Varianten des erfindungsgemäßen Verfahrens werden, falls die Reaktion der Vorderradbremsen auf den Testpuls auf einen Fehler schließen läßt, die Schlupfschwellen, nämlich die Differenz zwischen dem Bremsschlupf der Vorderradbremsen und dem Bremsschlupf der Hinterradbremsen, für das Einsetzen der Regelung um einen vorgegebenen festen Betrag oder um einen von der Reaktion der Vorderräder abhängigen Wert angehoben. Die Druckbegrenzung durch die EBKV-Regelung setzt also in diesem Fall erst bei einer höheren Schlupfdifferenz Vorderachse/Hinterachse ein. Bei völligem Ausfall der Vorderradbremsen wird zweckmäßigerweise die Regelung abgeschaltet.

Weitere Merkmale, Vorteile und Anwendungsmöglichkeiten der Erfindung gehen aus der folgenden Beschreibung anhand einer Abbildung hervor, die in systematischer Vereinfachung die wichtigsten Komponenten einer Bremsanlage mit Blockierschutzregelung und elektrischer Regelung der Bremskraftverteilung wiedergibt.

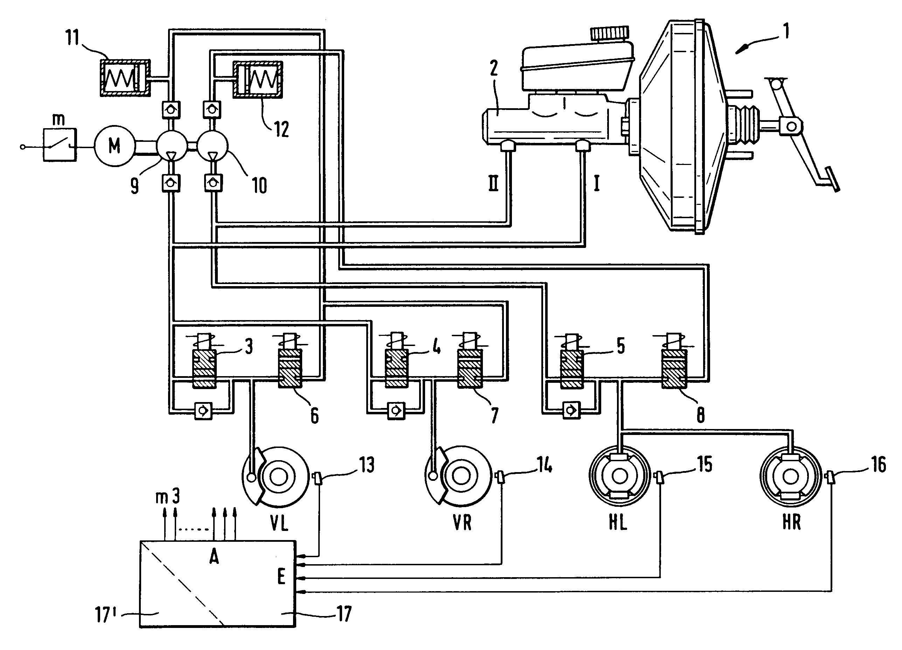

Die Abbildung zeigt eine blockiergeschützte Bremsanlage mit elektronischer Regelung der Bremskraftverteilung auf die Vorderachse und Hinterachse. Die wesentlichen Komponenten der Bremsanlage sind ein Bremsdruckgeber 1 mit einem Tandem-Hauptzylinder 2, an den in zwei geschlossenen, voneinander unabhängigen hydraulischen Bremskreisen I,II die Radbremsen in sogen. Schwarz/Weiß-Aufteilung angeschlossen sind. In den Bremsleitungen sind elektromagnetisch betätigbare Einlaß- und Auslaßventile 3,4,5;6,7,8, eingefügt. Außerdem sind eine zweikreisige Hydraulikpumpe 9,10 mit einem gemeinsamen elektrischen Antriebsmotor M und Niederdruckspeicher 11,12 vorgesehen. Des weiteren ist die Bremsanlage mit radindividuellen Sensoren 13 bis 16 ausgerüstet, deren Signale einem elektronischen Regler 17 zugeführt werden, der die Sensorsignale verarbeitet und auswertet und der die Bremsdrucksteuersignale erzeugt. Über die angedeuteten Ausgänge A des Reglers werden die Bremsdrucksteuersignale den elektrisch betätigbaren Hydraulikventilen 3 bis 8 und über ein Relais m dem Antriebsmotor M der Hydraulikpumpe 9,10 zugeführt.

Mit Hilfe der Hydraulikpumpe 9,10, die nur während einer Blockierschutzregelung in Funktion ist, wird das in der Bremsdruck-Abbauphase über die Auslaßventile 6 bis 8 abgeleitete Druckmittel in bekannter Weise in die Bremskreise I,II zurückgefördert. Die Niederdruckspeicher 11,12 dienen in der Druckabbauphase als Zwischenspeicher.

An den Bremskreis I sind die beiden Vorderräder VL,VR über je ein Einlaß-/Auslaßventilpaar 3,6;4,7 und an den Bremskreis II die Hinterräder HL,HR über ein gemeinsames Ventilpaar 5,8 angeschlossen.

Die elektronische Regelung der Bremskraftverteilung in Abhängigkeit von dem Bremsschlupf bzw. der Differenz des Bremsschlupfes an der Vorderachse und an der Hinterachse geschieht ebenfalls mit Hilfe des Reglers 17. Hierzu ist der Regler mit zusätzlichen Schaltkreisen, die durch den Abschnitt 17' des Reglers symbolisiert sind, ausgerüstet, oder der Regler ist, wenn Microcomputer zur Signalverarbeitung vorgesehen sind, entsprechend programmiert. Diese Schaltkreise 17' bzw. die entsprechenden Programmteile sind auch für die Durchführung des erfindungsgemäßen Verfahrens zuständig. Zur Durchführung der Tests wird während einer Teilbremsung, d.h. einer ungeregelten Bremsung, ein kurzer Druckabbaupuls, der sich auf das Bremsgeschehen praktisch nicht auswirkt, an das Einlaß-/Auslaßventilpaar 3,6 bzw. 4,7 eines oder beider Vorderräder VL,VR angelegt und mit Hilfe der Sensoren 13 bzw. 14 die Raktion des Rades auf diesen Druckabbaupuls ermittelt.

Läßt nun die Reaktion des Raddrehverhaltens eines oder beider Vorderräder VL,VR auf den kurzen Druckabbaupuls auf eine starke Verstimmung einer oder beider Vorderradbremsen oder gar auf einen Ausfall des Bremskreises I schließen, greifen die Schaltkreise 17' in die Regelung der Bremskraftverteilung ein. Die Beschränkung des Bremsdruckanstiegs an den Hinterrädern wird aufgehoben. Dies geschieht durch Sperren der Ansteuerung des Einlaßventils 5, so daß dieses in seiner Ruhestellung bzw. Durchlaßstellung bleibt.

Je nach Art des durch die Reaktion der Vorderräder festgestellten Fehlers kann auch die Schwelle für das Einsetzen der Bremskraftverteilungs-Regelung angehoben werden. In diesem Fall kann der Bremsschlupf an den Hinterrädern größer werden, bevor die EBKV-Regelung einsetzt.

Durch das erfindungsgemäße Verfahren werden alle Fehler erkannt, die zu einer zu geringen Bremskraft an der Vorderachse führen. Neben einer Verstimmung der Bremse und einem Totalausfall des Vorderachs-Bremskreises wird auch z.B. eine Leckage über die Auslaßventile 6 oder 7 oder ein fehlerbedingtes Sperren der Einlaßventile 3,4 erfaßt.

Durch die Erfindung wird somit in sehr einfacher Weise, lediglich durch eine entsprechende Ergänzung oder Programmierung der Regler-Elektronik 17,17', die Funktionssicherheit einer Bremsanlage mit elektronischer Regelung der Bremskraftverteilung entscheidend erhöht. Sicherheitsbedingte Einwände gegen eine derartige elektronische Regelung der Bremskraftverteilung, die bisher bei Versagen der Vorderradbremsen durch Unterbremsung der Hinterachse zu einer Bremswegverlängerung führen konnte, werden damit hinfällig.

## Patentansprüche

1. Verfahren zur Erhöhung der Funktionssicherheit einer Bremsanlage mit elektronischer Bremskraftverteilung (EBKV), bei dem die Differenz zwischen dem Schlupf der Vorderräder und dem Schlupf der Hinterräder als Regelgröße dient und bei dem der Druckanstieg in den Hinterradbremsen begrenzt wird, dadurch **gekennzeichnet**, daß in regelmäßigen Intervallen oder in Abhängigkeit von wiederkehrenden Ereignissen die Reaktion der Vorderräder (VR,VL) auf eine Änderung des in die Vorderradbremsen eingesteuerten Druckes getestet wird und daß bei einer unter einem vorgegebenen Grenzwert liegenden Reaktion die Begrenzung des Druckanstiegs in den Radbremsen der Hinterräder (HR,HL) als Auswirkung der EBKV-Regelung aufgehoben wird.

2. Verfahren nach Anspruch 1, dadurch **gekennzeichnet**, daß während eines Bremsvorgangs der Bremsdruck an einem Vorderrad (VR, VL) durch einen oder mehrere kurze Bremsdruck-Abbaupulse verringert und die Änderung des Raddrehverhaltens als Reaktion auf diesen Druckabbau ermittelt und zur Beurteilung der Bremsenfunktion ausgewertet wird.

3. Verfahren nach Anspruch 1 oder 2, dadurch **gekennzeichnet**, daß nacheinander beide Vorderräder (VR, VL) mit Testpulsen bzw. Bremsdruckabbaupulsen beaufschlagt werden und die Reaktion des Raddrehverhaltens auf diese Pulse ausgewertet wird.

4. Verfahren zur Erhöhung der Funktionssicherheit einer Bremsanlage mit elektronischer Bremskraftverteilung (EBKV), bei dem eine Regelschwelle für das Einsetzen der EBKV - Regelung vorgegeben ist, bei dem die Differenz zwischen dem Schlupf der Vorderräder und dem Schlupf der Hinterräder als Regelgröße dient und bei dem der Druckanstieg in den Hinterradbremsen begrenzt wird, dadurch **gekennzeichnet**, daß in regelmäßigen Intervallen oder in Abhängigkeit von wiederkehrenden Ereignissen die Reaktion der Vorderräder (VR, VL) auf eine Änderung des in die Vorderradbremsen eingesteuerten Druckes mittels Testpulsen getestet wird und daß bei unter einem vorgegebenen Grenzwert liegender Reaktion die Schlupfwelle, nämlich die Differenz zwischen dem Bremsschlupf der Vorderräder und dem Bremsschlupf der Hinterräder, die das Einsetzen der EBKV-Regelung bestimmt, um einen vorgegebenen festen Betrag oder um einen von der Reaktion der Vorderräder auf die Bremsdruckänderung abhängigen Wert angehoben wird.

5. Verfahren nach Anspruch 4, dadurch **gekennzeichnet**, daß in Abhängigkeit von der Reaktion des Raddrehverhaltens auf die Testpulse die Regelschwellen für das Einsetzen der EBKV-Regelung variiert werden und daß bei Überschreitung eines vorgegebenen Grenzwertes der Reaktion des Raddrehverhaltens auf die Änderung des in die Vorderradbremsen eingesteuerten Druckes, z. B. bei völligem Ausfall einer Vorderradbremse oder bei weitgehender Minderung der Bremsenwirkung, die EBKV-Regelung aufgehoben wird.

## Claims

1. A method of enhancing the reliability in operation of a brake system with electronic brake force distribution (EBKV), in which the difference between the slip of the front wheels and the slip of the rear wheels serves as a control quantity, and in which the pressure rise in the rear-wheel brakes is limited,
**characterized** in that the reaction of the front wheels (VR, VL) to a variation in the pressure introduced into the front-wheel brakes is tested in regular intervals or in dependence on recurrent events, and in that when a reaction occurs which is below a predetermined limit value, the limitation of the pressure rise in the wheel brakes of the rear wheels (HR, HL) as an effect of the electronic brake force distribution control is eliminated.

2. A method as claimed in claim 1,
**characterized** in that, during a braking operation, the braking pressure at a front wheel (VR, VL) is reduced by one or several short braking pressure reduction pulses, and the change in the wheel rotational behaviour as a reaction to this pressure reduction is determined and is evaluated to judge the function of the brakes.

3. A method as claimed in claim 1 or claim 2,
**characterized** in that test pulses or braking pressure reduction pulses are applied consecutively to both front wheels (VR, VL) and the reaction of the wheel rotational behaviour to the pulses is evaluated.

4. A method of enhancing the reliability in operation of a brake system with electronic brake force distribution (EBKV) including a control threshold for the commencement of the electronic brake force distribution control, in which the difference between the slip of the front wheels and the slip of the rear wheels serves as a control quantity, and in which the pressure rise in the rear-wheel brakes is limited,
**characterized** in that the reaction of the front wheels (VR, VL) to a variation in the pressure introduced into the front-wheel brakes is tested by means of test pulses in regular intervals or in dependence on recurrent events, and in that on occurrence of a reaction which is below a predetermined limit value, the slip threshold, i.e. the difference between the brake slip of the front wheels and the brake slip of the rear wheels which determines the commencement of the electronic brake force distribution control, is raised by a predetermined, invariable amount or by a value which depends on the reaction of the front wheels to the braking pressure variation.

5. A method as claimed in claim 4,
**characterized** in that the control thresholds for the commencement of the electronic brake force distribution control are varied in dependence on the reaction of the wheel rotational behaviour to the test pulses, and in that the electronic brake force distribution control is disabled when a predetermined limit value of the reaction of the wheel rotational behaviour to the variation of the pressure introduced into the front-wheel brake is exceeded, i.e. upon total malfunction of a front-wheel brake or considerable reduction of the brake effect.

## Revendications

1. Procédé visant à augmenter la sécurité de fonctionnement d'un système de freinage comportant une régulation électronique de la répartition de l'effort de freinage (EBKV), dans lequel la différence entre le glissement des roues avant et le glissement des roues arrière sert de grandeur de régulation, et dans lequel la montée en pression des freins des roues arrière est limitée,
caractérisé en ce que la réaction des roues avant (VR, VL) à une modification de la pression appliquée aux freins des roues avant est essayée à intervalles réguliers ou en fonction d'événements récurrents, et en ce qu'en présence d'une réaction située en dessous d'une valeur limite prédéfinie, la limitation de la montée en pression des freins des roues arrière (HR, HL) à la suite d'une régulation EBKV est suspendue.

2. Procédé selon la revendication 1, caractérisé en ce que, pendant une opération de freinage, la pression de freinage régnant au niveau d'une roue avant (VR, VL) est diminuée par une ou plusieurs brèves impulsions de réduction de la pression de freinage, et que la modification du comportement de rotation de la roue en réaction à cette diminution de la pression est déterminée et analysée en vue d'évaluer le fonctionnement des freins.

3. Procédé selon la revendication 1 ou 2, caractérisé en ce que les deux roues avant (VR, VL) sont soumises l'une après l'autre aux impulsions d'essai, voire aux impulsions de réduction de la pression de freinage, et que la réaction du comportement de rotation des roues à ces impulsions est analysée.

4. Procédé visant à augmenter la sécurité de fonctionnement d'un système de freinage comportant une régulation électronique de la répartition de l'effort de freinage (EBKV), dans lequel un seuil de régulation déterminant le déclenchement de la régulation EBKV est prévu, dans lequel la différence entre le glissement des roues avant et le glissement des roues arrière sert de grandeur de régulation, et dans lequel la montée en pression des freins des roues arrière est limitée,
caractérisé en ce que la réaction des roues avant (VR, VL) à une modification de la pression appliquée aux freins des roues avant est essayée à intervalles réguliers ou en fonction d'événements récurrents, par impulsions d'essai, et en ce qu'en présence d'une réaction située en dessous d'une valeur limite prédéfinie, le seuil de glissement, à savoir, la différence entre le glissement de freinage des roues avant et le glissement de freinage des roues arrière, qui détermine le début de la régulation EBKV, est relevé d'une valeur fixe prédéfinie ou d'une valeur dépendant de la réaction des roues avant à la modification de la pression de freinage.

5. Procédé selon la revendication 4, caractérisé en ce qu'en fonction de la réaction du comportement de rotation des roues aux impulsions d'essai, les seuils de régulation déterminant le début de la régulation EBKV sont modifiés, et en ce qu'en cas de dépassement d'une valeur limite prédéfinie de la réaction du comportement de rotation des roues à une modification de la pression appliquée aux freins des roues avant, par exemple en cas de défaillance totale d'un frein avant ou d'une diminution substantielle de l'effet de freinage, la régulation EBKV est suspendue.
